(19) Europäisches Patentamt
European Patent Office
Office européen des brevets

(11) **EP 3 385 917 B1**

(12) **EUROPEAN PATENT SPECIFICATION**

(45) Date of publication and mention of the grant of the patent:
**21.01.2026 Bulletin 2026/04**

(21) Application number: **16875926.4**

(22) Date of filing: **17.11.2016**

(51) International Patent Classification (IPC):
**G06T 17/05** (2011.01)    **G06T 7/00** (2017.01)
**G06T 15/08** (2011.01)    **G06T 15/00** (2011.01)
**G06T 15/50** (2011.01)

(52) Cooperative Patent Classification (CPC):
**G06T 17/00; G06T 7/55; H04N 1/00827;**
G06T 2207/10024; G06T 2207/10028

(86) International application number:
**PCT/KR2016/013280**

(87) International publication number:
**WO 2017/104984 (22.06.2017 Gazette 2017/25)**

(54) **METHOD AND APPARATUS FOR GENERATING THREE-DIMENSIONAL MODEL USING VOLUMETRIC CLOSEST POINT APPROACH METHOD**

VERFAHREN UND VORRICHTUNG ZUR ERZEUGUNG EINES DREIDIMENSIONALEN MODELLS UNTER VERWENDUNG EINES ANNÄHERUNGSVERFAHRENS AN DEN VOLUMETRISCHEN NÄCHSTGELEGENEN PUNKT

PROCÉDÉ ET APPAREIL DE GÉNÉRATION DE MODÈLE TRIDIMENSIONNEL UTILISANT UN PROCÉDÉ D'APPROCHE VOLUMÉTRIQUE DE POINT LE PLUS PROCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 US 201514970142**
**14.11.2016 KR 20160151303**

(43) Date of publication of application:
**10.10.2018 Bulletin 2018/41**

(73) Proprietor: **Samsung Electronics Co., Ltd.**
**Suwon-si, Gyeonggi-do 16677 (KR)**

(72) Inventors:
• **CHEN, George Q.**
**Mountain View**
**California 94043 (US)**
• **BRILL, Frank**
**Mountain View**
**California 94043 (US)**

(74) Representative: **HGF**
**HGF Limited**
**4th Floor, 1 City Square**
**Leeds LS1 2AL (GB)**

(56) References cited:
**US-A1- 2013 156 297     US-A1- 2014 146 057**
**US-A1- 2014 146 057     US-A1- 2015 145 957**
**US-A1- 2015 145 957     US-A1- 2015 178 908**

• **SAMUNDA PERERA, NICK BARNES, XUMING HE, ANU NICTA: "Motion Segmentation of Truncated Signed distance Function based Volumetric Surfaces", IEEE WINTER CONFERENCE ON APPLICATIONS OF COMPUTER VISION, 2015, pages 1046 - 1053, XP002785460**
• **WHELAN, T. ET AL.: "Real-Time Large-Scale Dense RGB-D SLAM with Volumetric Fusion", THE INTERNATIONAL JOURNAL OF ROBOTICS RESEARCH, vol. 34, no. 4-5, 1 April 2015 (2015-04-01), pages 598 - 626, XP055393421**

- **BYLOW, ERIK ET AL.: "Real-Time Camera Tracking and 3D Reconstruction Using Signed Distance Functions", ROBOTICS: SCIENCE AND SYSTEMS(RSS), ONLINE PROCEEDINGS, vol. 9, 2013, XP055183325**

**Description**

TECHNICAL FIELD

The present disclosure relates generally to three-dimensional (3D) scanning using a volumetric approach, and, more specifically, to a method and apparatus for creating a 3D model using volumetric closest point approach. Potential applications are 3D scanning of objects and automatic mapping of buildings and terrain.

BACKGROUND ART

Three-dimensional (3D) scanning is an area of great concern in such fields as 3D virtual reality, robotics or 3D printer, etc. Among various methods of 3D scanning, a technique of using distance information obtained from a depth camera provides excellent performance and is widely used in 3D scanners.

Sumunda Perera, Nick Barnes, Xuming He, Anu Nicta: "Motion Segmentation of Truncated Signed distance Function based on Volumetric Surfaces" (IEEE Winter Conference on Applications of Computer Vision, 2015, pages 1046-1053) discloses a solution to the motion segmentation of TSDF volumes. This document proposes a novel data term by solving sparse multi-body motion segmentation and computing likelihoods for each motion label in the RGB-D image space; and, a novel pairwise term based on gradients of the TSDF volume.

US 2014/146057 A1 discloses an apparatus for 3D reconstruction based on multiple GPUs and a method thereof are disclosed. The 3D reconstruction apparatus according to the present invention includes a 3D reconstruction apparatus, comprising: a camera configured to generate depth data for 3D space; a first GPU configured to update first TSDF volume data with first depth data generated for a first area and predict a surface point of an object which is present in the space from the first updated TSDF volume data; a second GPU configured to update second TSDF volume data with second depth data generated for a second area and predict a surface point of an object which is present in the space from the second updated TSDF volume data; and a master GPU configured to combine a surface point predicted from the first TSDF volume data and a surface point estimated from the second TSDF volume data.

US 2015/145957 A1 discloses a 3D scanning method. The 3D scanning method includes generating first 3D scan data by performing a 3D scan job. When a predetermined user command is input, a mode of the 3D scan job is changed to a correction mode. When the 3D scan job is resumed while the correction mode is maintained, the first 3D scan data is corrected based on second 3D scan data generated by resuming the 3D scan job.

DESCRIPTION OF EMBODIMENTS

TECHNICAL PROBLEM

Provided is a novel and efficient way to combine the information from several depth-camera images to create a full representation of an object or environment.

SOLUTION TO PROBLEM

The scope of protection conferred is determined from the appended claims.

Other technical features may be readily apparent to one of ordinary skill in the art from the following figures, descriptions, and claims.

For a more complete understanding of the present disclosure and its advantages, reference is now made to the following description taken in conjunction with the accompanying drawings, in which like reference numerals represent like parts.

ADVANTAGEOUS EFFECTS OF DISCLOSURE

The present disclosure is more efficient and robust than previous approaches, therefore, the present disclosure is more useful on resource-constrained mobile devices for consumers that have to work in unconstrained environments.

BRIEF DESCRIPTION OF DRAWINGS

FIG. 1 illustrates a high level block diagram of a three-dimensional (3D) scanning system according to an embodiment.
FIG. 2 illustrates in-bound scanning according to an embodiment.

FIG. 3 illustrates object volumetric representation according to an embodiment.

FIG. 4 illustrates a slice of a truncated signed distance function (TSDF) volume according to an embodiment.

FIGS. 5A and 5B illustrate flowcharts for 3D scanning operation according to an embodiment.

FIG. 6 illustrates the volume fusion operation for creating the TSDF volume according to an embodiment.

FIG. 7 illustrates the pose estimation operation according to an embodiment.

BEST MODE

The scope of protection conferred is determined from the appended claims.

MODE OF DISCLOSURE

Before providing the detailed description below, it may be advantageous to set forth definitions of certain words and phrases used throughout this patent document. The term "controller" means any device, system or part thereof that controls at least one operation, such a device may be implemented in hardware, firmware or software, or some combination of at least two of the same. It should be noted that the functionality associated with any particular controller or processor may be centralized or distributed, whether locally or remotely. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication unless explicitly specified. The terms "include" and "comprise," as well as derivatives thereof, mean inclusion without limitation. The term "or" is inclusive, meaning "and/or." The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer-readable recording medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer-readable recording medium" includes any type of medium capable of being accessed by a computer, such as read only memory (ROM), random access memory (RAM), a hard disk drive, a compact disc (CD), a digital video disc (DVD), or any other type of memory. A "non-transitory" computer-readable recording medium excludes wired, wireless, optical, or other communication links that transport transitory electrical signals or other signals. A non-transitory computer-readable recording medium includes media where data can be permanently stored and media where data can be stored and later overwritten, such as a rewritable optical disc or an erasable memory device.

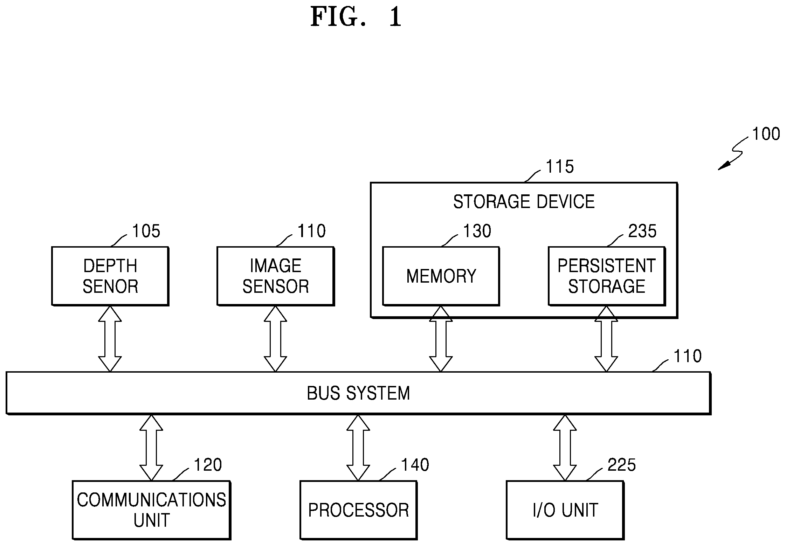

FIGS. 1 through 7, discussed below, and the various embodiments used to describe the principles of the present disclosure in this patent document are by way of illustration only and should not be construed in any way to limit the scope of the disclosure. Those of skill in the art will understand that the principles of the present disclosure may be implemented in any suitably arranged three-dimensional (3D) scanning.

FIG. 1 illustrates a high level block diagram of a 3D scanning system 100 according to an embodiment. The embodiment of the 3D scanning system 100 shown in FIG. 1 is for illustration only. Other embodiments could be used without departing from the scope of the present disclosure.

The 3D scanning system 100 includes a depth sensor 105. The depth sensor 105 is configured to generate a depth map from physical surroundings. However, the present disclosure is not limited thereto. The depth sensor 105 may include a light illuminator and an image sensor. The light illuminator may project light having known patterns such as a grid pattern on the scene. The image sensor may be sensitive to both color and the wavelength of the illuminant, and may be used to collect color and light reflected from a target. The image sensor may include a color image sensor.

The depth sensor 105 may be attached to a mobile device. According to an embodiment, the 3D scanning system 100 may be implemented in a mobile device and the depth sensor 105 may be built into the mobile device, or may be plugged into the mobile device. The mobile device may be a "smart" phone, tablet, laptop computer or other portable device capable of wireless or wire communications.

A processor 140 is configured to execute instructions that can be loaded into a memory 130.

For example, the processor 140 may include microprocessors, microcontrollers, digital signal processors, field programmable gate arrays (FPGA), application specific integrated circuits (ASIC), and discrete circuitry. The processor 140 may be configured to execute processes and programs in the memory 230, such as operations for 3D scanning.

The memory 130 and a permanent storage 235 are examples of storage devices 115, which represent any structure(s) capable of storing and facilitating retrieval of information such as the depth images. The memory 130 may be random access memory (RAM) or any other suitable volatile or non-volatile storage device(s). The permanent storage 235 may contain one or more components or devices supporting longer-term storage of data, such as read only memory (ROM), hard drive, flash memory, or optical disc.

The communications unit 120 may be configured to support communications with other systems or devices. For example, the communications unit 120 may include a network interface card (NIC) or a wireless transceiver facilitating communications over the network. The communications unit 120 may be configured to support communications through any suitable physical or wireless communication link(s).

An I/O unit 225 is configured to allow for input and output of data. For example, the I/O unit 225 may be configured to provide a connection for user input through a keyboard, mouse, keypad, touch screen, or other suitable input device. The I/O unit 225 may also be configured to send output to a display, printer, or other suitable output device.

The display 150 may be configured to provide real-time feedback to user indicative of the 3D data that has been captured from a scene.

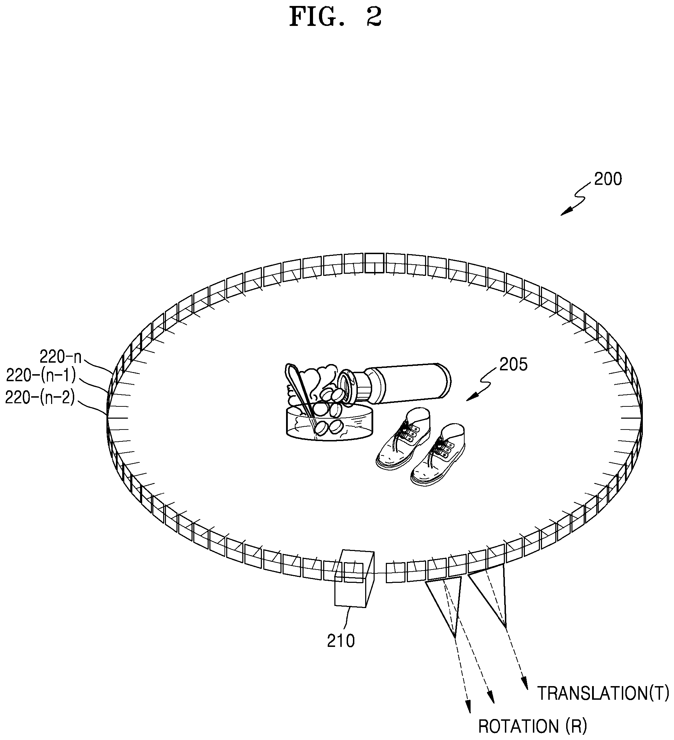

FIG. 2 illustrates in-bound scanning 200 according to an embodiment. The embodiment of the in-bounding scanning 200 shown in FIG. 2 is for illustration only. Other embodiments could be used without departing from the scope of the present disclosure.

A mobile device 210 may be equipped with a depth sensor. For example, the mobile device 210 may be an embodiment of the 3D scanning system 100.

While the mobile device 210 moves around target objects 205, the depth sensor produces depth maps for images (i.e., depth images) captured by the camera. A 3D model of the object is feedback to the user and shown on the device. In an embodiment, the mobile device 210 may scan the target objects 205 spinning around itself. When a 360-degree scan is complete, a 3D model of the object is computed.

The depth sensor may record N depth image frames 220-1, 220-2, ⋯220-n periodically, such as every second or a frame every 1/2 second.

These N depth image frames are fused together based on the difference between translation T and rotation R or the depth sensor pose along and around the x, y and z axis in the current frame and previous frame. The translation T may indicate the distance between frames and the rotation R may indicate an angular position with respect to an object.

The resulting depth maps may be fused sequentially into a volumetric 3D representation which stores the truncated signed distance function (TSDF). After all depth maps have been fused, a 3D point cloud or mesh can be generated from the volume data. In order to carry out the fusion, the camera pose of each frame is estimated as described later in the present disclosure.

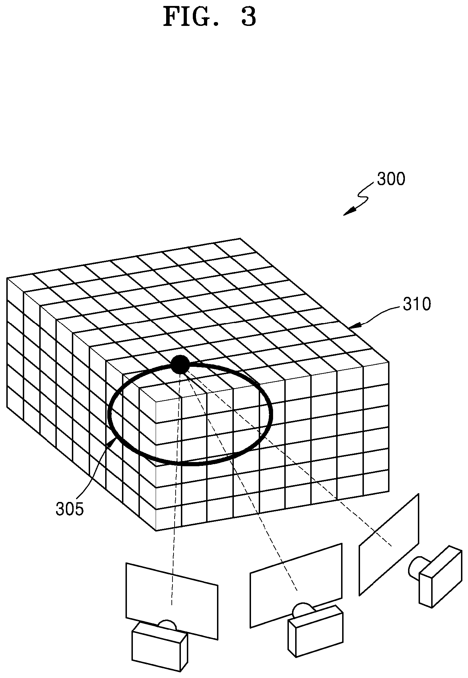

FIG. 3 illustrates object volumetric representation 300 according to an embodiment. The embodiment of object volumetric representation 300 shown in FIG. 3 is for illustration only. Other embodiments could be used without departing from the scope of the present disclosure.

Conceptualizing a target object 305 embedded inside a 3D grid, each 3D grid stores a floating point value, which is called truncated signed distance function (TSDF).

The 3D grid filled with TSDF values is called a TSDF volume 310. The value of TSDF represents a distance of grid location to the target object surface. TSDF encodes both the distance and siding of the grid point to the object surface.

The TSDF volume stores higher quality data than any input because it stores all data up-to-date, and because noise is filtered out in the process.

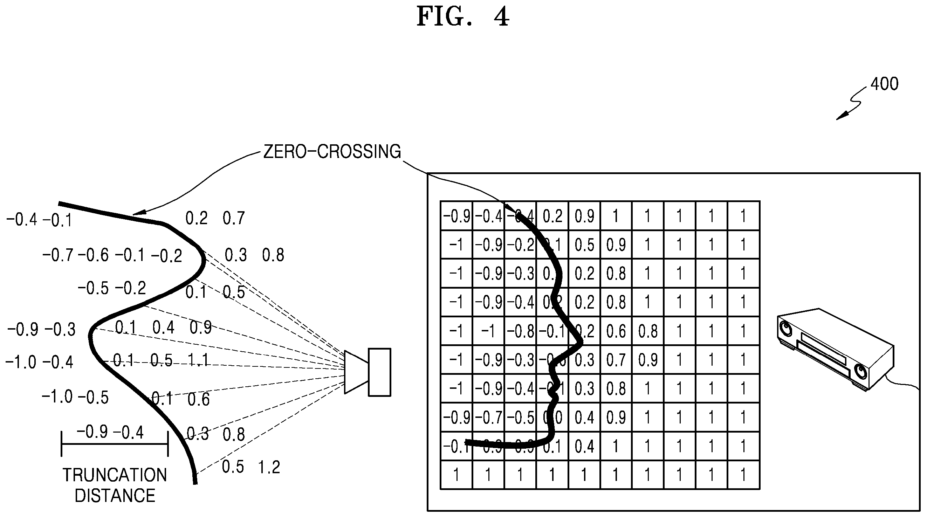

FIG. 4 illustrates one slice 400 of TSDF volume according to an embodiment. The embodiment of the slice of the TSDF volume shown in FIG. 4 is for illustration only. Other embodiments could be used without departing from the scope of the present disclosure.

Each slice of TSDF volume may be filled with TSDF values. If a sign of TSDF is positive, the grid locates outside the target object.

If a sign of TSDF is negative, the grid locates inside the target object. For example, +1 means 1 millimeter (mm) outside away from the face, -1 means 1 mm inside away from the face surface.

A line of zero-crossing thus encodes the object surface which is interpolated to achieve sub-grid accuracy. In other words, zero-crossing is the location of the object surface.

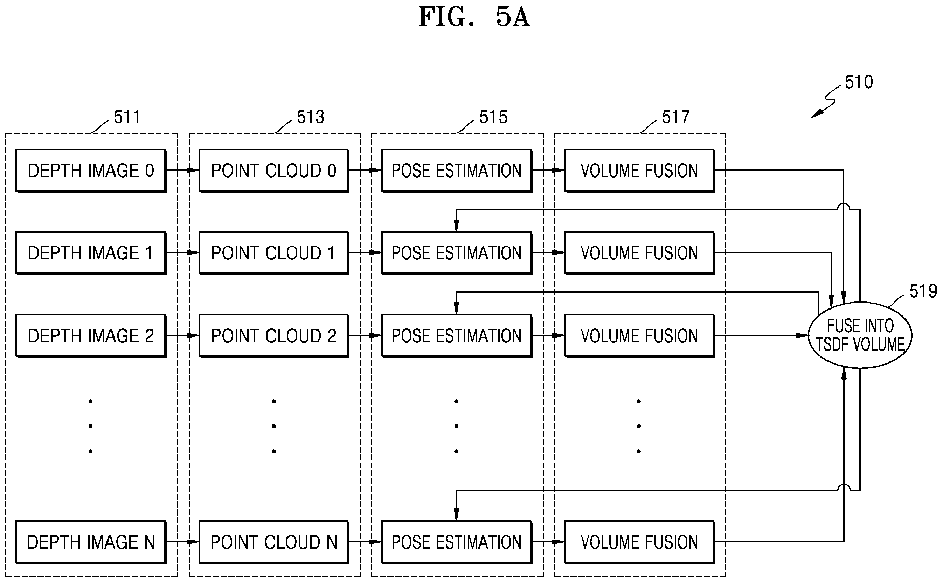

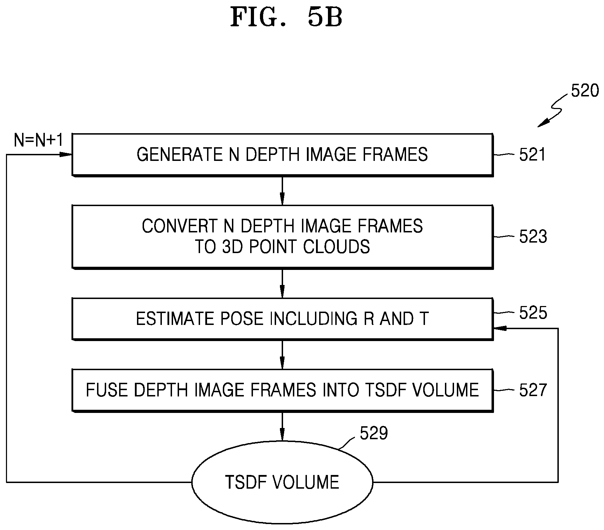

FIGS. 5A and 5B illustrate flowcharts 500, 501 for 3D scanning operation according to an embodiment. The embodiments of 3D scanning operation shown in FIGS. 5A and 5B are for illustration only. Other embodiments could be used without departing from the scope of the present disclosure.

The depth sensor generates N depth image frames 511 periodically.

N 3D point clouds 513 may be obtained by being converted from the N depth image frames.

Depth image pose estimation 515 of the depth sensor including T and R for a volume may be performed before an incoming depth map is fused.

Each converted depth image frame may be fused into TSDF volume 529 based on the estimated depth sensor pose including the translation T and rotation R.

In operation 521, the depth sensor may generate N depth image frames periodically.

These N depth image frames are converted to 3D point clouds in operation 523.

In order to fuse an incoming depth map, its sensor pose including rotation R and translation T with respect to the volume may be firstly estimated in operation 525.

Each converted depth image frame may be fused into the TSDF volume 529 based on the estimated depth sensor pose including the translation T and rotation R in operation 527.

Volume fusion is the process of sequentially fusing multiple input depth maps into the aforementioned volumetric representation.

There are at least three pose estimation technologies for volume fusion:

Iterative closest point (ICP).

In order to fuse the new data N resulted from the incoming depth map to the already-fused data M, for each point in N, ICP searches for the closest point in M and uses the set of point pairs to compute the pose.

To accelerate the search, a K-dimensional (KD) Tree is constructed from M. Then, after N is fused with M, a new KD Tree is constructed for the updated M before fusing the next depth map.

Volumetric gradient descent (VGD).

This technology also uses the volumetric representation. It solves the pose estimation problem by minimizing $f(P(N))$ where f is the volume function and P is the pose to be computed.

Structure-from-Motion (SfM) for obtaining a target structure from motion generation.

This approach is used when the color information is available in addition to depth, e.g. from RGB-D sensors.

It first detects feature points in each color image, then finds the correspondences among these feature points across multiple images, and finally solves the camera poses of multiple sensors using non-linear optimization techniques.

ICP utilizes a KD Tree to find the closest point of N. VGD relies on the gradient of the volume function f and does not involve the closest point at all.

An embodiment of the present disclosure uses the gradient to compute the closest point.

The embodiments of the present disclosure are distinguished from ICP, for example, in how the closest points are calculated. The embodiments of the present disclosure are distinguished from VGDt, for example, in how the gradient is actually used. SfM requires the detection of enough number of feature points in the color images and the identification of the correspondences of these feature points.

These requirements are avoided in depth-sensor based techniques in accordance with the present disclosure.

Pose estimation may be performed either using additional data structures or casting the problem into an optimization framework which is hard to implement with fixed-point math.

An embodiment of the present disclosure uses the volume data for both pose estimation and depth map fusion. This has the advantage of being able to implement in fixed-point math without the help of special auxiliary data structures.

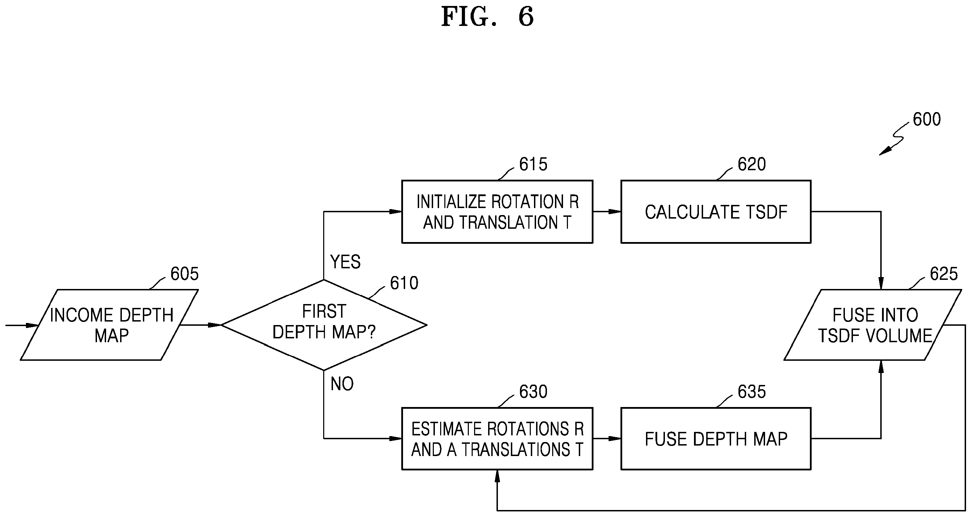

FIG. 6 illustrates a volume fusion operation 600 for creating TSDF volume 625 according to an embodiment.

The embodiment of the volume fusion operation 600 shown in FIG. 6 is for illustration only. Other embodiments could be used without departing from the scope of the present disclosure.

If an incoming depth map is the first depth map in operations in operation 605 and 610, the pose for first depth sensor position is initialized to be an initial angular position of the depth sensor for the rotation R and zero for the translation T (R=identity, T=0) in operation 615. Furthermore, TSDF may be calculated in operation 620 and may be fused into the TSDF volume in operation 625.

For the 2nd sensor position through the last depth sensor position, the rotations R and a translations T for each depth image are estimated using data of TSDF volume in operation 630.

The depth map may be then fused into the TSDF volume 625.

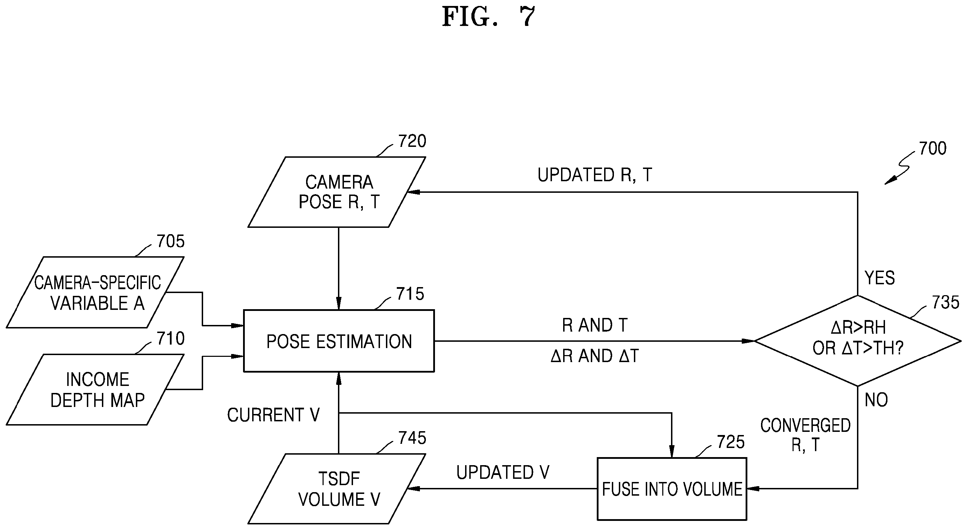

FIG. 7 illustrates a pose estimation operation 700 according to an embodiment.

The embodiment of the pose estimation operation 700 shown in FIG. 7 is for illustration only. Other embodiments could be used without departing from the scope of the present disclosure.

The input of the pose estimation operation may include the current depth map (i.e., depth image) $d_n$ (operation 710) and TDSF volume V filled with TSDF from $d_0$, $d_1$, ..., $d_{n-1}$ (operation 745).

The output of the pose estimation operation may be a pose of the $n^{th}$ sensor position, which may include R and T (operation 715).

The pose estimation operation may be repeated to determine each pose of all around sensor positions (i.e., frames).

With the above input, the pose estimation may begin with computing a 3D coordinate set N of a depth image from TSDF volume by using the following algorithm shown in Table 1.

[Table 1]

For each pixel (u, v) of $d_n$:
Retrieve depth $d = d_n$ (u, v);
Compute 3D coordinate $n = A^{-1}(u, v, 1)^T d$ , where A is the sensor intrinsic matrix including focal lengths, and u and v are integers; and
Insert n into N

Where A is the sensor intrinsic matrix including focal lengths, and u and v are positive integers, but are not limited thereto.

According to the algorithm of Table 1, a process may be performed to obtain the 3D coordinate set N as follows.

The pose estimation operation according to an embodiment may obtain a depth value $d_n(u, v)$ for each pixel in a current depth image.

In addition, the pose estimation operation may obtain the 3D coordinates (n) for each pixel in the 3D camera coordinate system based on the depth value for each pixel in the depth image. For example, the pose estimation may obtain the 3D coordinates (n) in the 3D camera coordinate system (world coordinate system) from 2D coordinates (u, v) for each pixel, by using the intrinsic matrix (A) of a sensor including focal lengths and the depth value $d_n(u, v)$ for each pixel in the depth image.

In addition, the pose estimation may obtain a 3D coordinate set N composed of 3D coordinates (n) for pixels in the depth image.

The next step may be to initialize R and T. If another initialization method is available such as 2D tracking or ICP, R and T are set accordingly. Otherwise, R=Rn-1, T=Tn-1 are set (operation 705).

Subsequently, the R and T for each sensor position is estimated by using the following algorithm shown in Table 2.

【Table 2】

Loop

    For each point **n** in N:

        $p = R \cdot \mathbf{n} + T$;

          If $|f(p)| < B$ and $\nabla f(p) \neq 0$

          Insert p into P;

          $q = p - f(p)\dfrac{\nabla f(p)}{|\nabla f(p)|}$ where $f(p)$ is the TSDF at location p and

$\nabla f(p)$ is the TSDF gradient at the same location; and

          Insert q into Q

    $P_m = \text{mena}(P)$ and $Q_m = \text{mean}(Q)$

    $(U, W, V) = \text{SVD}\big((P - P_m)^T (Q - Q_m)\big)$, where SVD is single value

decomposition which returns three matrices U, W, V, wherein W is a diagonal

matrix, and U, V are decomposed matrices

        $\Delta R = V \cdot U^T$, $\Delta T = Q_m - R \cdot P_m$

        $R = \Delta R \cdot R$, $T = \Delta R \cdot T + \Delta T$

Until $|\Delta R| < \text{angleThreshold}$ and $|\Delta T| < \text{distanceThreshold}$, where the

angleThreshold and distanceThreshold are real numbers

[0080] Where f(p) is the TSDF at location p and $\nabla f(p)$ is the TSDF gradient at the same location. SVD is single value decomposition. The single value decomposition for an M × N rectangular matrix (m by n rectangular matrix) A with rank k is to decompose A into U, W, and V components satisfying $A = UWV^T$. U is an M × M orthogonal matrix composed of a left singular vector, and $A \cdot A^T$ is obtained by orthogonal diagonalization by eigenvalue decomposition. W is an M × N diagonal matrix, and respective square roots $\lambda_1^{0.5}$, $\lambda_2^{0.5}$, ... $\lambda_k^{0.5}$ of nonzero eigenvalues $\lambda_1, \lambda_2, ... \lambda_k$ are major diagonal and all the other elements are zero. V is an N × N orthogonal matrix composed of a right singular vector, and $A^T \cdot A$ is obtained by orthogonal diagonalization by eigenvalue decomposition. The angleThreshold and distanceThreshold are real numbers (operation 735).

According to the algorithm of Table 2, a process of estimating R and T for each sensor position may be performed as follows.

The pose estimation operation according to an embodiment may obtain 3D coordinates (n) in the camera coordinate system corresponding to each pixel from the 3D coordinate set N for the pixels.

Furthermore, the pose estimation operation may obtain 3D coordinates (p) corresponding to the 3D coordinates (n) in each pixel through coordinate conversion from a camera coordinate system to a world coordinate system based on an initial estimated value of T and an initial estimated value of R. As mentioned above, if another initialization method is available such as 2D tracking or ICP, the initial estimated values of R and T may be determined according to other possible initialization methods. If other initialization methods are not possible, the initial estimated values of R and T may be determined by values of R and T for a previous sensor position.

The pose estimation operation, based on the TSDF value and the TSDF gradient at a position corresponding to the 3D coordinates (p), may determine whether a distance from a surface of the estimated TSDF volume to the position corresponding to the 3D coordinates (p) is within a predetermined distance B. For example, when TSDF at the position corresponding to the 3D coordinates (p) is less than the predetermined distance B and the TSDF gradient is not 0, the pose estimation operation may determine that the position corresponding to the 3D coordinates (p) is within the predetermined distance B from the surface of the TSDF volume. For example, the predetermined distance B may be 10 mm, but is not limited thereto.

In addition, the pose estimation may obtain a 3D coordinate set P composed of the 3D coordinates (p) corresponding to the position within the predetermined distance B from an object surface.

The pose estimation operation may obtain 3D coordinates (q) corresponding to a position corrected to be closer to the object surface than the position corresponding to each of the 3D coordinates (p) constituting the 3D coordinate set P. The pose estimation operation may determine the corrected 3D coordinates (q) based on the TSDF and TSDF gradients at the position corresponding to each of the 3D coordinates (p) constituting the 3D coordinate set P. The pose estimation operation may determine the 3D coordinates (q) by moving each of the 3D coordinates (p) constituting the 3D coordinate set P in the opposite direction of the TSDF gradient direction by the TSDF value.

In addition, the pose estimation may obtain a 3D coordinate set Q composed of corrected 3D coordinates (q).

The pose estimation operation may estimate R and T for the current sensor position using pre-correction 3D coordinates (p) and the corrected 3D coordinates (q).

The pose estimation operation may determine a center coordinate (pm) from the 3D coordinates (p) constituting the 3D coordinate set P. In addition, the pose estimation operation may determine a set P-Pm composed of column vectors corresponding to a difference between each of the 3D coordinates (p) and the center coordinate (pm) of the coordinate set P. Similarly, the pose estimation operation may determine a set Q-Qm composed of column vectors corresponding to a difference between each of the coordinates (q) and a center coordinate (qm) of the coordinate set Q.

The pose estimation operation may perform single value decomposition using a matrix corresponding to the set P-Pm and a matrix corresponding to the set Q-Qm. For example, the pose estimation operation may obtain the U, W, and V components through the single value decomposition on a transposed matrix of the matrix corresponding to the set P-Pm and a product matrix of the matrix corresponding to the set Q-Qm.

The pose estimation operation may determine the estimated value of R using a product matrix of V and U transpose matrices. Also, the pose estimation operation may estimate T using a difference between a product matrix of a matrix corresponding to the set P-Pm and the existing estimated R in the matrix corresponding to the set Q-Qm.

The pose estimation operation may continue the estimation process of R and T until magnitude of a changing rate of the estimated R is less than a predetermined threshold (angle threshold) and magnitude of a changing rate of the estimated T is less than a predetermined threshold (distance threshold).

Once T and R satisfying respective thresholds are identified and then updated in operation 720, each depth image frame is fused into TSDF volume 745 based on the T and R in operation 725.

The pose estimation in accordance with an embodiment of the present disclosure provides stability, efficiency, and generality:

With respect to stability, since depth data from all frames up to the current one are fused into the volume, compared to ICP, more information is available to the pose estimation process. Thus the process is more stable and robust to input noise.

With respect to efficiency, the present disclosure is more efficient than ICP because a model point can be computed with only three multiplications and three subtractions, while ICP needs to construct the KD Tree and perform a tree search. The present disclosure is more efficient than VGD because it does not need to solve a group of non-linear equations composed from thousands of data points.

With respect to generality, RGB-based approaches such as SfM rely on good lighting environment and textured object surfaces. Otherwise the feature detection will fail. Depth-based approaches such as ours do not have such limitations.

While each process flow and/or signal sequence depicted in the figures and described above depicts a sequence of steps and/or signals, either in series or in tandem, unless explicitly stated or otherwise self-evident (such as that a signal cannot be received before being transmitted) no inference should be drawn from that sequence regarding specific order of performance, performance of steps or portions or transmission of signals thereof serially rather than concurrently or in an overlapping manner, or performance of the steps or transmission of signals depicted exclusively without the occurrence of intervening or intermediate steps or signals. Moreover, those skilled in the art will recognize that complete processes and signal sequences are not illustrated or described. Instead, for simplicity and clarity, only so much of the respective processes and signal sequences as is unique to this disclosure or necessary for an understanding of this disclosure is depicted and described.

Although the present disclosure has been described with example embodiments, various changes and modifications can be suggested to one of skill in the art. It is intended that the present disclosure encompass such changes and modifications as fall within the scope of the appended claims.

## Claims

1. A computer implemented method (700) for three-dimensional '3D' scanning, the method comprising:

   obtaining (710) a plurality of depth images when one of a depth sensor (105) and an object (205) rotates with respect to the other; and

for each depth image:

estimating (715) a rotation R and a translation T using data of truncated signed distance function 'TSDF' volume (310); and

fusing (725) each depth image accumulatively into the TSDF volume based on the estimated R and T;
where the rotation R indicates an angular position with respect to the object;
where the translation T indicates a distance between the plurality of depth images; and
wherein the estimating of the R and T for each depth image comprises:

obtaining a depth value for each pixel of the each depth image;
calculating 3D coordinates 'n' in a 3D camera coordinate system corresponding to each of the pixels based on the depth value for each of the pixels and an intrinsic matrix, including focal lengths, of the depth sensor; and
determining a 3D coordinate set N composed of the 3D coordinates 'n'.

2. The method of claim 1, further comprising:
initializing (615) the R as an initial angular position of the depth sensor with respect to the object and the T as zero when the depth image is a first-taken depth image.

3. The method of claim 1, further comprising:
setting the R and T as a previous R and T of a previous depth image when the depth image is not a first-taken depth image.

4. The method of claim 1, wherein the estimating of the R and T for each depth image comprises:
for each of the 3D coordinates 'n' included in the 3D coordinate set N:

calculating 3D coordinates 'p' by performing coordinate conversion from a camera coordinate system to a world coordinate system based on a predetermined 'initial' estimated value of T and a predetermined 'initial' estimated value of R;
obtaining a TSDF value and a TSDF gradient from the TSDF volume data at the 3D coordinates 'p';
calculating 3D coordinates 'q' by moving the 3D coordinates 'p' in the opposite direction of a TSDF gradient direction by the TSDF value; and
estimating the T and R based on a 3D coordinate set P composed of the 3D coordinates 'p' and a 3D coordinate set Q composed of the 3D coordinates 'q'.

5. A device (100; 210) comprising:

a depth sensor (105) configured to generate a plurality of depth images when one of a device and an object rotates with respect to the other; and
a processor (140) configured to:
for each depth image:

estimate (715) a rotation R and a translation T using data of truncated signed distance function 'TSDF' volume; and

fuse (725) each depth image accumulatively into the TSDF volume based on the estimated R and T;
where the rotation R indicates an angular position with respect to the object;
where the translation T indicates a distance between the plurality of depth images;
wherein the processor is configured to:

obtain a depth value for each pixel of the each depth image;
calculate 3D coordinates 'n' in a 3D camera coordinate system corresponding to each of the pixels based on the depth value for each of the pixels and an intrinsic matrix, including focal lengths, of the depth sensor; and
determine a 3D coordinate set N composed of the 3D coordinates 'n'.

6. The device (100; 210) of claim 5, wherein the processor (140) is further configured to, when the depth image is a first-taken depth image, initialize (615) R as an initial angular position of a depth sensor with respect to the object and T as zero.

7. The device (100; 210) of claim 5, wherein the processor (140) is further configured to, when the depth image is not a first-taken depth image, set the R and T as a previous R and T of a previous depth image.

8. The device (100; 210) of claim 5, wherein the processor (140) is configured to:

   for each of the 3D coordinates 'n' included in the 3D coordinate set N:

   calculate 3D coordinates 'p' by performing coordinate conversion from a camera coordinate system to a world coordinate system based on a predetermined 'initial' estimated value of T and a predetermined 'initial' estimated value of R;
   obtain a TSDF value and a TSDF gradient from the TSDF volume data at the 3D coordinates 'p';
   calculate 3D coordinates 'q' by moving the 3D coordinates 'p' in the opposite direction of a TSDF gradient direction by the TSDF value; and
   estimate the T and R based on a set P composed of the 3D coordinates 'p' and a 3D coordinate set Q composed of the 3D coordinates 'q'.

9. The device (100; 210) of claim 5, wherein the depth sensor (105) comprises a color sensor.

10. The device (100; 210) of claim 5, wherein the depth sensor (105) is included in a mobile device.

11. A non-transitory computer-readable recording medium comprising program code, that when executed by at least one processor, causes the at least one processor to:

   obtain (710) a plurality of depth images when one of a depth sensor (105) and an object (205) rotates with respect to the other; and,
   for each depth image:

   estimate (715) a rotation R and a translation T using data of truncated signed distance function 'TSDF' volume (310); and
   fuse (725) each depth image accumulatively into the TSDF volume (310) based on the estimated rotation R and translation T;
   where the rotation R indicates an angular position with respect to the object;
   where the translation T indicates a distance between the plurality of depth images; and
   wherein the estimating of the R and T for each depth image comprises:

   obtaining a depth value for each pixel of the each depth image;
   calculating 3D coordinates 'n' in a 3D camera coordinate system corresponding to each of the pixels based on the depth value for each of the pixels and an intrinsic matrix, including focal lengths, of the depth sensor; and
   determining a 3D coordinate set N composed of the 3D coordinates 'n'.

**Patentansprüche**

1. Computerimplementiertes Verfahren (700) zum dreidimensionalen ,3D'-Scannen, wobei das Verfahren Folgendes umfasst:

   Erlangen (710) einer Vielzahl von Tiefenbildern, wenn eines von einem Tiefensensor (105) und einem Objekt (205) in Bezug auf das andere rotiert; und
   für jedes Tiefenbild:

   Schätzen (715) einer Rotation R und einer Translation T unter Verwendung von Daten eines Truncated-Signed-Distance-Funktion-,TSDF'-Volumens (310); und
   Verschmelzen (725) jedes Tiefenbilds kumulativ in das TSDF-Volumen basierend auf dem geschätzten R und T;
   wobei die Rotation R eine Winkelposition in Bezug auf das Objekt angibt;
   wobei die Translation T einen Abstand zwischen der Vielzahl von Tiefenbildern angibt; und
   wobei das Schätzen des R und T für jedes Tiefenbild Folgendes umfasst:

Erlangen eines Tiefenwerts für jedes Pixel jedes Tiefenbilds;
Berechnen von 3D-Koordinaten ‚n' in einem 3D-Kamera-Koordinatensystem, das jedem der Pixel entspricht, basierend auf dem Tiefenwert für jedes der Pixel und einer intrinsischen Matrix, einschließlich Brennweiten, des Tiefensensors; und
Bestimmen eines 3D-Koordinatensatzes N, der aus den 3D-Koordinaten ‚n' besteht.

2. Verfahren nach Anspruch 1, ferner umfassend:
Initialisieren (615) des R als eine anfängliche Winkelposition des Tiefensensors in Bezug auf das Objekt und des T als Null, wenn das Tiefenbild ein als erstes aufgenommenes Tiefenbild ist.

3. Verfahren nach Anspruch 1, ferner umfassend:
Einstellen des R und T als ein vorheriges R und T eines vorherigen Tiefenbilds, wenn das Tiefenbild kein als erstes aufgenommenes Tiefenbild ist.

4. Verfahren nach Anspruch 1, wobei das Schätzen des R und T für jedes Tiefenbild Folgendes umfasst:
für jede der 3D-Koordinaten ‚n', die in dem 3D-Koordinatensatz N enthalten sind:

Berechnen von 3D-Koordinaten 'p' durch Durchführen einer Koordinatenumwandlung von einem Kamerakoordinatensystem in ein Weltkoordinatensystem basierend auf einem vorbestimmten 'anfänglichen' geschätzten Wert von T und einem vorbestimmten ‚anfänglichen' geschätzten Wert von R;
Erlangen eines TSDF-Wertes und eines TSDF-Gradienten aus den TSDF-Volumendaten an den 3D-Koordinaten ‚p';
Berechnen von 3D-Koordinaten 'q' durch Bewegen der 3D-Koordinaten 'p' in die entgegengesetzte Richtung einer TSDF-Gradientenrichtung um den TSDF-Wert; und
Schätzen des T und R basierend auf einem 3D-Koordinatensatz P, der aus den 3D-Koordinaten 'p' besteht, und einem 3D-Koordinatensatz Q, der aus den 3D-Koordinaten 'q' besteht.

5. Einrichtung (100; 210), umfassend:

einen Tiefensensor (105), der dazu konfiguriert ist, eine Vielzahl von Tiefenbildern zu erzeugen, wenn eines von einer Einrichtung und einem Objekt in Bezug auf das andere rotiert; und
einen Prozessor (140), der zu Folgendem konfiguriert ist:
für jedes Tiefenbild:

Schätzen (715) einer Rotation R und einer Translation T unter Verwendung von Daten eines Truncated-Signed-Distance-Funktion-,TSDF'-Volumens; und
Verschmelzen (725) jedes Tiefenbilds kumulativ in das TSDF-Volumen basierend auf dem geschätzten R und T;
wobei die Rotation R eine Winkelposition in Bezug auf das Objekt angibt;
wobei die Translation T einen Abstand zwischen der Vielzahl von Tiefenbildern angibt;
wobei der Prozessor zu Folgendem konfiguriert ist:

Erlangen eines Tiefenwerts für jedes Pixel jedes Tiefenbilds;
Berechnen von 3D-Koordinaten ‚n' in einem 3D-Kamera-Koordinatensystem, das jedem der Pixel entspricht, basierend auf dem Tiefenwert für jedes der Pixel und einer intrinsischen Matrix, einschließlich Brennweiten, des Tiefensensors; und
Bestimmen eines 3D-Koordinatensatzes N, der aus den 3D-Koordinaten ‚n' besteht.

6. Einrichtung (100; 210) nach Anspruch 5, wobei der Prozessor (140) ferner dazu konfiguriert ist, wenn das Tiefenbild ein als erstes aufgenommenes Tiefenbild ist, R als eine anfängliche Winkelposition eines Tiefensensors in Bezug auf das Objekt und T als Null zu initialisieren (615).

7. Einrichtung (100; 210) nach Anspruch 5, wobei der Prozessor (140) ferner dazu konfiguriert ist, wenn das Tiefenbild kein als erstes aufgenommenes Tiefenbild ist, das R und T als ein vorheriges R und T eines vorherigen Tiefenbilds einzustellen.

8. Einrichtung (100; 210) nach Anspruch 5, wobei der Prozessor (140) zu Folgendem konfiguriert ist:
für jede der 3D-Koordinaten ‚n', die in dem 3D-Koordinatensatz N enthalten sind:

Berechnen von 3D-Koordinaten 'p' durch Durchführen einer Koordinatenumwandlung von einem Kamerakoordinatensystem in ein Weltkoordinatensystem basierend auf einem vorbestimmten 'anfänglichen' geschätzten Wert von T und einem vorbestimmten 'anfänglichen' geschätzten Wert von R;

Erlangen eines TSDF-Wertes und eines TSDF-Gradienten aus den TSDF-Volumendaten an den 3D-Koordinaten 'p';

Berechnen von 3D-Koordinaten 'q' durch Bewegen der 3D-Koordinaten 'p' in die entgegengesetzte Richtung einer TSDF-Gradientenrichtung um den TSDF-Wert; und

Schätzen des T und R basierend auf einem Satz P, der aus den 3D-Koordinaten 'p' besteht, und einem 3D-Koordinatensatz Q, der aus den 3D-Koordinaten 'q' besteht.

9. Einrichtung (100; 210) nach Anspruch 5, wobei der Tiefensensor (105) einen Farbsensor umfasst.

10. Einrichtung (100; 210) nach Anspruch 5, wobei der Tiefensensor (105) in einer mobilen Einrichtung enthalten ist.

11. Nichtflüchtiges computerlesbares Aufzeichnungsmedium, das einen Programmcode umfasst, der, wenn er durch mindestens einen Prozessor ausgeführt wird, den mindestens einen Prozessor zu Folgendem veranlasst:

Erlangen (710) einer Vielzahl von Tiefenbildern, wenn eines von einem Tiefensensor (105) und einem Objekt (205) in Bezug auf das andere rotiert; und

für jedes Tiefenbild:

Schätzen (715) einer Rotation R und einer Translation T unter Verwendung von Daten eines Truncated-Signed-Distance-Funktion-'TSDF'-Volumens (310); und

Verschmelzen (725) jedes Tiefenbilds kumulativ in das TSDF-Volumen (310) basierend auf der geschätzten Rotation R und Translation T;

wobei die Rotation R eine Winkelposition in Bezug auf das Objekt angibt;

wobei die Translation T einen Abstand zwischen der Vielzahl von Tiefenbildern angibt; und

wobei das Schätzen des R und T für jedes Tiefenbild Folgendes umfasst:

Erlangen eines Tiefenwerts für jedes Pixel jedes Tiefenbilds;

Berechnen von 3D-Koordinaten 'n' in einem 3D-Kamera-Koordinatensystem, das jedem der Pixel entspricht, basierend auf dem Tiefenwert für jedes der Pixel und einer intrinsischen Matrix, einschließlich Brennweiten, des Tiefensensors; und

Bestimmen eines 3D-Koordinatensatzes N, der aus den 3D-Koordinaten 'n' besteht.

## Revendications

1. Procédé mis en œuvre par ordinateur (700) permettant un balayage tridimensionnel « 3D », le procédé comprenant :

l'obtention (710) d'une pluralité d'images de profondeur lorsque l'un d'un capteur de profondeur (105) et d'un objet (205) tourne par rapport à l'autre ; et

pour chaque image de profondeur :

l'estimation (715) d'une rotation R et d'une translation T à l'aide de données de volume (310) de fonction de distance signée tronquée « TSDF » ; et

la fusion (725) de chaque image de profondeur cumulativement dans le volume TSDF sur la base des R et T estimées ;

où la rotation R indique une position angulaire par rapport à l'objet ;

où la translation T indique une distance entre la pluralité d'images de profondeur ; et

ladite estimation des R et T pour chaque image de profondeur comprenant :

l'obtention d'une valeur de profondeur pour chaque pixel de chaque image de profondeur ;

le calcul des coordonnées 3D « n » dans un système de coordonnées de caméra 3D correspondant à chacun des pixels sur la base de la valeur de profondeur pour chacun des pixels et d'une matrice intrinsèque, comprenant les distances focales, du capteur de profondeur ; et

la détermination d'un ensemble de coordonnées 3D N composé des coordonnées 3D « n ».

**2.** Procédé de la revendication 1, comprenant en outre :
l'initialisation (615) de R comme étant la position angulaire initiale du capteur de profondeur par rapport à l'objet et de T comme étant zéro lorsque l'image de profondeur est une image de profondeur prise pour la première fois.

**3.** Procédé de la revendication 1, comprenant en outre :
le réglage des R et T en tant que R et T précédents d'une image de profondeur précédente lorsque l'image de profondeur n'est pas une image de profondeur prise en premier.

**4.** Procédé de la revendication 1, ladite estimation des R et T pour chaque image de profondeur comprenant :
pour chacune des coordonnées 3D « n » comprises dans l'ensemble de coordonnées 3D N :

> calcul des coordonnées 3D « p » en réalisant une conversion de coordonnées d'un système de coordonnées de caméra à un système de coordonnées universelles sur la base d'une valeur estimée « initiale » prédéfinie de T et d'une valeur estimée « initiale » prédéfinie de R ;
> l'obtention d'une valeur TSDF et d'un gradient TSDF à partir des données de volume TSDF au niveau des coordonnées 3D « p »;
> le calcul des coordonnées 3D « q » en déplaçant les coordonnées 3D « p » dans la direction opposée à une direction de gradient TSDF de la valeur TSDF ; et
> l'estimation de T et R sur la base d'un ensemble de coordonnées 3D P composé des coordonnées 3D « p » et d'un ensemble de coordonnées 3D Q composé des coordonnées 3D « q ».

**5.** Dispositif (100 ; 210) comprenant :

> un capteur de profondeur (105) configuré pour générer une pluralité d'images de profondeur lorsque l'un d'un dispositif et d'un objet tourne par rapport à l'autre ; et
> un processeur (140) configuré pour :
> pour chaque image de profondeur :

> > estimer (715) une rotation R et une translation T à l'aide de données de volume de fonction distance signée tronquée « TSDF » ; et
> > fusionner (725) chaque image de profondeur cumulativement dans le volume TSDF sur la base des R et T estimés ;
> > où la rotation R indique une position angulaire par rapport à l'objet ;
> > où la translation T indique une distance entre la pluralité d'images de profondeur ;
> > ledit processeur étant configuré pour :

> > > obtenir une valeur de profondeur pour chaque pixel de chaque image de profondeur ;
> > > calculer les coordonnées 3D « n » dans un système de coordonnées de caméra 3D correspondant à chacun des pixels sur la base de la valeur de profondeur pour chacun des pixels et d'une matrice intrinsèque, comprenant les distances focales, du capteur de profondeur ; et
> > > déterminer un ensemble de coordonnées 3D N composé des coordonnées 3D « n ».

**6.** Dispositif (100 ; 210) de la revendication 5, ledit processeur (140) étant en outre configuré pour, lorsque l'image de profondeur est une image de profondeur prise pour la première fois, initialiser (615) R en tant que position angulaire initiale d'un capteur de profondeur par rapport à l'objet et T en tant que zéro.

**7.** Dispositif (100 ; 210) de la revendication 5, ledit processeur (140) étant en outre configuré pour, lorsque l'image de profondeur n'est pas une image de profondeur prise en premier, régler les R et T comme étant les R et T précédents d'une image de profondeur précédente.

**8.** Dispositif (100 ; 210) de la revendication 5, ledit processeur (140) étant configuré pour :
pour chacune des coordonnées 3D « n » comprises dans l'ensemble de coordonnées 3D N :

> calculer les coordonnées 3D « p » en réalisant une conversion de coordonnées d'un système de coordonnées de caméra à un système de coordonnées universelles sur la base d'une valeur estimée « initiale » prédéfinie de T et d'une valeur estimée « initiale » prédéfinie de R ;
> obtenir une valeur TSDF et un gradient TSDF à partir des données de volume TSDF au niveau des coordonnées 3D « p » ;

calculer des coordonnées 3D « q » en déplaçant les coordonnées 3D « p » dans la direction opposée à une direction de gradient TSDF de la valeur TSDF ; et

estimer T et R sur la base d'un ensemble P composé des coordonnées 3D « p » et d'un ensemble de coordonnées 3D Q composé des coordonnées 3D « q ».

9. Dispositif (100 ; 210) de la revendication 5, ledit capteur de profondeur (105) comprenant un capteur de couleur.

10. Dispositif (100 ; 210) de la revendication 5, ledit capteur de profondeur (105) étant compris dans un dispositif mobile.

11. Support d'enregistrement non transitoire lisible par ordinateur comprenant un code de programme qui, lorsqu'il est exécuté par au moins un processeur, amène l'au moins un processeur à :

obtenir (710) une pluralité d'images de profondeur lorsque l'un d'un capteur de profondeur (105) et d'un objet (205) tourne par rapport à l'autre ; et

pour chaque image de profondeur :

estimer (715) une rotation R et une translation T à l'aide de données de volume (310) de fonction distance signée tronquée « TSDF » ; et

fusionner (725) chaque image de profondeur cumulativement dans le volume (310) TSDF sur la base de la rotation R et de la translation T estimées ;

où la rotation R indique une position angulaire par rapport à l'objet ;

où la translation T indique une distance entre la pluralité d'images de profondeur ; et

ladite estimation des R et T pour chaque image de profondeur comprenant :

l'obtention d'une valeur de profondeur pour chaque pixel de chaque image de profondeur ;

le calcul des coordonnées 3D « n » dans un système de coordonnées de caméra 3D correspondant à chacun des pixels sur la base de la valeur de profondeur pour chacun des pixels et d'une matrice intrinsèque, comprenant les distances focales, du capteur de profondeur ; et

la détermination d'un ensemble de coordonnées 3D N composé des coordonnées 3D « n ».

# FIG. 1

# FIG. 2

200

220-n
220-(n-1)
220-(n-2)

205

210

TRANSLATION(T)

ROTATION (R)

# FIG. 3

FIG. 4

400

ZERO-CROSSING

-0.4 -0.1        0.2  0.7

-0.7 -0.6 -0.1 -0.2    0.3  0.8

-0.5 -0.2        0.1  0.5

-0.9 -0.3    0.1  0.4  0.9

-1.0 -0.4    -0.1  0.5  1.1

-1.0 -0.5        0.1  0.6

-0.9 -0.4        0.3  0.8

TRUNCATION
DISTANCE

0.5  1.2

| -0.9 | -0.4 | -0.4 | 0.2 | 0.9 | 1 | 1 | 1 | 1 | 1 |
| -1 | -0.9 | -0.2 | 0.1 | 0.5 | 0.9 | 1 | 1 | 1 | 1 |
| -1 | -0.9 | -0.3 | 0. | 0.2 | 0.8 | 1 | 1 | 1 | 1 |
| -1 | -0.9 | -0.4 | 0.2 | 0.2 | 0.8 | 1 | 1 | 1 | 1 |
| -1 | -1 | -0.8 | -0.1 | 0.2 | 0.6 | 0.8 | 1 | 1 | 1 |
| -1 | -0.9 | -0.3 | 0 | 0.3 | 0.7 | 0.9 | 1 | 1 | 1 |
| -1 | -0.9 | -0.4 | 0.1 | 0.3 | 0.8 | 1 | 1 | 1 | 1 |
| -0.9 | -0.7 | -0.5 | 0.0 | 0.4 | 0.9 | 1 | 1 | 1 | 1 |
| -0.1 | 0.9 | 0.9 | 0.1 | 0.4 | 1 | 1 | 1 | 1 | 1 |
| 1 | 1 | 1 | 1 | 1 | 1 | 1 | 1 | 1 | 1 |

EP 3 385 917 B1

## FIG. 5A

# FIG. 5B

520

N=N+1 → GENERATE N DEPTH IMAGE FRAMES — 521

CONVERT N DEPTH IMAGE FRAMES
TO 3D POINT CLOUDS — 523

ESTIMATE POSE INCLUDING R AND T — 525

FUSE DEPTH IMAGE FRAMES INTO TSDF VOLUME — 527

529

TSDF VOLUME

## FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014146057 A1

- US 2015145957 A1

**Non-patent literature cited in the description**

- **SUMUNDA PERERA** ; **NICK BARNES** ; **XUMING HE** ; **ANU NICTA**. Motion Segmentation of Truncated Signed distance Function based on Volumetric Surfaces. *IEEE Winter Conference on Applications of Computer Vision*, 2015, 1046-1053